(19) Europäisches Patentamt
European Patent Office
Office européen des brevets

(11) EP 3 584 271 B1

(12) EUROPEAN PATENT SPECIFICATION

(45) Date of publication and mention of the grant of the patent:
**28.07.2021 Bulletin 2021/30**

(21) Application number: **18754100.8**

(22) Date of filing: **25.01.2018**

(51) Int Cl.:
***C08J 3/14*** *(2006.01)* ***C08G 69/14*** *(2006.01)*
***C08G 69/26*** *(2006.01)* ***C08G 69/24*** *(2006.01)*

(86) International application number:
**PCT/JP2018/002214**

(87) International publication number:
**WO 2018/150835 (23.08.2018 Gazette 2018/34)**

(54) **POLYAMIDE PARTICLES, AND METHOD FOR PRODUCING POLYAMIDE PARTICLES**

POLYAMIDPARTIKEL UND VERFAHREN ZUR HERSTELLUNG VON POLYAMIDPARTIKELN

PARTICULES DE POLYAMIDE ET PROCÉDÉ DE PRODUCTION DE PARTICULES DE POLYAMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.02.2017 JP 2017025388**

(43) Date of publication of application:
**25.12.2019 Bulletin 2019/52**

(73) Proprietor: **Kureha Corporation**
**Chuo-ku**
**Tokyo 103-8552 (JP)**

(72) Inventors:
- **MURANO, Daisuke**
**Tokyo 103-8552 (JP)**
- **YAMANE, Kazuyuki**
**Tokyo 103-8552 (JP)**
- **XIAO, Yingge**
**Tokyo 103-8552 (JP)**
- **SUZUKI, Yoshinori**
**Tokyo 103-8552 (JP)**

(74) Representative: **BRP Renaud & Partner mbB**
**Rechtsanwälte Patentanwälte**
**Steuerberater**
**Königstraße 28**
**70173 Stuttgart (DE)**

(56) References cited:
**WO-A1-2010/101134**
**WO-A1-2012/161174**
**WO-A1-2017/195705**
**JP-A- 2004 051 751**
**JP-A- 2006 328 208**
**JP-A- 2014 227 471**
**JP-A- 2015 061 918**
**JP-A- 2016 186 068**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 584 271 B1

**Description**

Technical Field

The present invention relates to particles of polyamide particles and a method for producing the same.

Background Art

Polyamide particles are used not only in the fields of cosmetics and industrial products, but also in a wide range of fields, and various polyamide particles have been developed. For example, WO 2010/101134 A discloses sponge-like polyamide particles having a substantially spherical outer shape and including holes in an outer surface part and an interior portion.

JP 2004-051751 A describes polyamide particles which are in the form of a cylinder, a dumbbell or a hand drum and have an appropriate porosity. Also described is method for manufacturing such polyamide particles. The polyamide particles have a particle length of 0.5 - 25 μm, L/D (particle length/particle diameter) of 3 - 50, and a specific surface area of 0.1 - 10 $m^2$/g. The polyamide particles are composed of a polyamide which is synthesized from 50 - 100 wt.% of an amide-forming monomer (A), and 0 - 50 wt.% of an amide-forming monomer (B), whereby the amide-forming monomer (A) is a 9 - 22 C amide-forming monomer, and the amide-forming monomer (B) is a 2 - 8 C amide-forming monomer.

Among polyamide particles, for example, polyamide 4 and the like are known as biodegradable plastics. Among these, polyamide 4 is expected to be used in multiple applications due to its high hygroscopicity.

Citation List

Non-Patent Literature

Non-Patent Document 1: "Alkali-catalyzed polymerization of α-pyrrolidone in the presence of N,N'-adipyl-dipyrrolidone", Masakazu TANIYAMA, Takashi NAGAOKA, Toshihiro TAKADA, Kazunori SANUYAMA, Journal of the Chemical Society of Japan, Industrial Chemistry Section, Vol. 65, No. 3, 1962, pp. 419-422

Summary of Invention

Technical Problems

In many applications, the shape and particle size of the polyamide particles are desired to be uniform. In order to make the particle size uniform, a method of pulverizing and sieving the obtained polyamide particles or the like is conceivable. However, a problem with such a method is that the manufacture becomes complicated by the inclusion of pulverization and sieving steps.

In addition, as the applications of polyamide 4 expand, there may be cases in which non-spherical particles are desired rather than that having the substantially spherical outer shape. However, the technique described in WO 2010/101134 A is a technique for producing substantially spherical polyamide particles, and WO 2010/101134 A does not disclose that other uniformly shaped particles than the spherical particle are produced.

In light of the foregoing, an object of the present invention is to provide non-spherical polyamide particles having small variations in particle shape.

Solution to Problems

In order to solve the problems described above, the polyamide particles according to the present invention consists of a polyamide consisting of repeating structural units having at least one alkylene group and at least one amide bond, each of the at least one alkylene group having 1 to 3 carbon atoms; and the polyamide particles have a configuration in which the main shape of the particles is a non-spherical shape with a circularity of less than 0.98 and in which a coefficient of variation (CV) of the circularity distribution is 30% or less.

The non-spherical shape does not meet the requirements for a spherical shape, which is a sphere with a sphericity of 80 or more. The circularity is a value that is determined by Equation (3):

$$\text{circularity} = 4\pi \cdot S/L^2 \cdot \cdot \cdot \text{Equation (3)},$$

where L is a total outer perimeter of a shape of the particles when the particles are viewed from one direction, and S is a surface area of the shape.

The coefficient of variation (CV) of a circularity distribution is a value that is determined by Equation (2):

$$\text{coefficient of variation (CV) of a circularity distribution (\%)} = [(\text{standard deviation in circularity distribution})/(\text{average value of circularity distribution})] \times 100 \cdots \text{Equation (2)};$$

and

the sphericity is a value calculated in accordance with Equation (4) below by measuring the short diameter and the long diameter for a quantity n of arbitrarily selected polyamide fine particles:

$$\text{Sphericity} = [(\Sigma(\text{short diameter/long diameter}))/n] \times 100 \cdots \text{Equation (4)}.$$

In order to solve the problems described above, a method for producing polyamide particles according to the present invention includes: a polymerization step of preparing, through polymerization, a polyamide including repeating structural units having at least one alkylene group and at least one amide bond, each of the at least one alkylene group having 1 to 3 carbon atoms; a dissolution step of dissolving the polyamide obtained in the polymerization step in hot water; and a precipitation step of precipitating particles of the polyamide by cooling a solution obtained in the dissolution step under stirring.

Advantageous Effects of Invention

According to the present invention, non-spherical polyamide particles having small variations in particle shape can be provided.

Brief Description of Drawings

FIG. 1 is an SEM image of polyamide particles obtained in Example 1. The scale bar represents 5 μm.
FIG. 2 is an SEM image of polyamide particles obtained in Example 2. The scale bar represents 5 μm.
FIG. 3 is an SEM image of polyamide particles obtained in Example 3. The scale bar represents 5 μm.
FIG. 4 is an SEM image of polyamide particles obtained in Example 4. The scale bar represents 5 μm.
FIG. 5 is an SEM image of polyamide particles obtained in Example 5. The scale bar represents 5 μm.
FIG. 6 is an SEM image of polyamide particles obtained in Example 6. The scale bar represents 5 μm.

Description of Embodiments

An embodiment of the polyamide particles and method for producing the same according to the present invention is described hereinafter.

Polyamide Particles

The polyamide particles in the present embodiment each consist of a polyamide consisting of repeating structural units having at least one alkylene group and at least one amide bond, each of the at least one alkylene group having 1 to 3 carbon atoms.

The above-mentioned structural unit is not particularly limited as long as the structural unit has at least one alkylene group and at least one amide bond, but the structural unit preferably has one or two alkylene groups. The structural unit also preferably has one or two amide bonds.

The number of the repeating structural units may be appropriately determined according to the weight average molecular weight of the polyamide. The weight average molecular weight of the polyamide is described below.

The alkylene groups contained in the structural unit are not particularly limited provided that the number of carbon atoms is from 1 to 3, but the number of carbon atoms is more preferably 2 or 3, and particularly preferably 3. In

addition, the alkylene group may be linear or branched.

An example of an aspect of the structural unit according to the present embodiment is a structural unit represented by Formula (1) below.

[Chemical Formula 1]

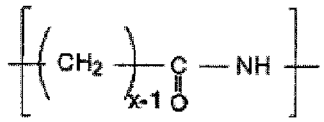

· · · Formula (1)

In Formula (1), x is 2, 3, or 4.

An example of another aspect of the structural unit according to the present embodiment is a structural unit represented by Formula (2) below.

[Chemical Formula 2]

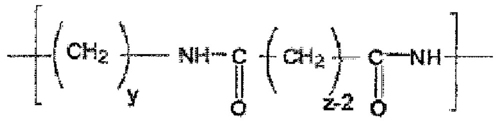

· · · Formula (2)

In Formula (2), y is 2 or 3, and z is 2, 3, or 4.

In the present specification, a polyamide having structural units represented by Formula (1) may be referred to as a "polyamide x" according to the number used for x in Formula (1). Thus, for example, a polyamide for which x in Formula (1) is 4 is referred to as "polyamide 4".

The weight average molecular weight (Mw) of the polyamide according to the present embodiment is not particularly limited, but it is preferably from 30,000 to 800,000, and more preferably from 50,000 to 500,000. When the weight average molecular weight of the polyamide is within this range, non-spherical particles are easily obtained.

The polyamide particles of the present embodiment are of non-spherical main shape having a circularity of less than 0.98, preferably less than 0.95, and more preferably less than 0.90.

In the present specification, the circularity is a value that is determined with respect to individual particles by Equation (3) below, where L is a total outer perimeter of the shape when the particles are viewed from one direction, and S is the surface area of the shape.

$$\text{Circularity} = 4\pi \cdot S/L^2 \quad \cdot \cdot \cdot \quad (3)$$

In addition, the fact that the main shape of the particles is a non-spherical shape with a circularity of less than 0.98 does not necessarily mean that all the particles have a non-spherical shape with a circularity of less than 0.98, and particles having a circularity of not less than 0.98 and spherical particles may also be included. Thus, the fact that the main shape of the particles is a non-spherical shape with a circularity of less than 0.98 may be, for example, an aspect in which 50% or more, 70% or more, or 90% or more of the particles contained in the polyamide particles are non-spherical shapes having a circularity of less than 0.98.

In the present specification, the matter of particles being a non-spherical shape means the particles are of a shape that does not meet the requirement for a spherical shape. The requirement for a spherical shape is a sphere with a sphericity of 80 or more, and spherical particles having a sphericity of less than 80 are non-spherical. Examples of non-spherical particles include rod-shaped particles. In addition, non-spherical particles include those having a shape for which it is difficult to determine the sphericity because of the difficulty in identifying the long diameter and the short diameter. Examples thereof include unevenly shaped particles such as dumbbell-shaped particles and particles fused together, as well as irregularly shaped particles such as those with indefinite shapes that do not correspond to any of these.

In the present specification, sphericity is a value calculated in accordance with Equation (4) below by measuring the short diameter and the long diameter for a quantity n of arbitrarily selected polyamide fine particles.

(Equation 4)

$$\text{Sphericity} = [(\Sigma(\text{short diameter/long diameter}))/n] \times 100 \quad \cdot \cdot \cdot \quad (4)$$

Note that 30 is suitably used as n.

In order to accurately measure the short diameter and the long diameter of the polyamide fine particles in the present embodiment, preferably, a scanning electron microscope (SEM) image is captured for the polyamide fine particles, and the short diameter and the long diameter of the polyamide fine particles are measured from the captured SEM image.

The circularity of the main shape of the particles is less than 0.98, but the circularity of the main shape of the particles may also be less than 0.95 or may be less than 0.90.

In the present embodiment, the coefficient of variation (hereinafter, referred to as the CV value) of the circularity distribution of the polyamide particles is 30% or less, preferably 29% or less, more preferably 28% or less, and particularly preferably 25% or less. When the CV value of the circularity distribution is 30% or less, variations in the circularity are small even with polyamide particles for which the particles are non-spherical, and uniformly shaped non-spherical particles are easily obtained.

The CV value represents the degree of dispersion in the circularity distribution of the polyamide particles and can be calculated according to the following Equation 2 based on a circularity distribution measured, for example, by a flow-type particle image analyzer (FPIA-3000: available from Sysmex Corporation).

$$\text{CV Value (\%)} = [(\text{Standard deviation in circularity distribution})/(\text{average value of circularity distribution})] \times 100 \quad \text{(Equation 2)}$$

The average particle size of the polyamide particles in the present embodiment is not particularly limited, but is typically from 1 μm to 300 μm, preferably from 1 μm to 100 μm, and more preferably from 1 μm to 50 μm. Note that the particle size of the individual particles in the polyamide particles of the present embodiment refers to the long diameter of the shape when determining the circularity described above.

In addition, for the polyamide particles of the present embodiment, the D90/D50 value of the particle size distribution of the polyamide particles is preferably 10 or less, more preferably 8 or less, and particularly preferably 5 or less. When the D90/D50 value of the particle size distribution is set to 10 or less, variations in the particle size are small even with polyamide particles for which the particles are non-spherical, and non-spherical particles with a uniform particle size are easily obtained.

Method for Producing Polyamide Particles

The method for producing the polyamide particles according to the present embodiment will be described below.

The polyamide particles according to the present embodiment are produced through a step of preparing a polyamide, a dissolution step in which the polyamide is dissolved in hot water, and a precipitation step in which particles of polyamide are precipitated. Note that, in the method for producing polyamide particles according to the present embodiment, a case is described in which a polymerization step of obtaining the polyamide through polymerization is used as the step of preparing the polyamide.

(1) Polymerization Step

The polyamide used in the production method according to the present embodiment is not particularly limited as long as it is a polyamide that includes repeating structural units having at least one alkylene group and at least one amide bond, each of the at least one alkylene group having 1 to 3 carbon atoms, as described above. A method for synthesizing such a polyamide is exemplified below.

First Polyamide Synthesis Method

A first polyamide synthesis method is for example a ring-opening polymerization using an organic compound having a lactam structure as a raw material. An example of the organic compound having a lactam structure is α-pyrrolidone. The method of ring-opening polymerization is not particularly limited, and examples thereof include known methods such as bulk polymerization and particle polymerization in a petroleum-based solvent.

More specifically, in this method, the polyamide is synthesized by, for example, subjecting the above-described organic compound having a lactam structure to hydrolysis to open the ring and then subjecting the product to dehydration condensation. Here, the following procedure may also be selected. That is, an anionic ring-opening polymerization method may be used in which a small amount of a base is reacted with an organic compound having a lactam structure to generate an anionic species, and the anionic species induce ring opening of the organic compound having a lactam structure, resulting in chain extension.

Second Polyamide Synthesis Method

A second polyamide synthesis method is for example a method of selfcondensation of amino acids. Examples of amino acids include glycine and γ-aminobutanoic acid.

More specifically, in this method, the polyamide is synthesized by subjecting the amino acids to dehydration condensation by heating under reduced pressure. Here, the following procedure may also be selected. That is, the Merrifield method, which is well-known as a method for producing a synthetic peptide, may be used in which beads of a polystyrene polymer gel having a diameter of around 0.1 mm and the like are used as a solid phase, amino acids are bonded thereto and subsequently condensed, and the end groups are deprotected to thereby elongate amino acid chains one by one.

Third Polyamide Synthesis Method

A third polyamide synthesis method, resulting in polyamides not falling under the claims, is for example a method of condensing a diamine and a dicarboxylic acid. Examples of the diamine include 1,2-ethylene diamine, 1,3-propane diamine, and 1,4-butylene diamine. Examples of the dicarboxylic acid include oxalic acid, malonic acid, and succinic acid.

Other Synthesis Methods for Polyamides

In case of the polyamide is polyamide 3, the polyamide 3 may be synthesized by, for example, a hydrogen transfer polymerization method of acrylamides.

Furthermore, the method for synthesizing the polyamide 4 is described, for example, in the Non-Patent Document 1 of "Alkali-catalyzed polymerization of α-pyrrolidone in the presence of N,N'-adipyl-dipyrrolidone", Masakazu TANIYAMA, Takashi NAGAOKA, Toshihiro TAKADA, Kazunori SANUYAMA, Journal of the Chemical Society of Japan, Industrial Chemistry Section, Vol. 65, No. 3, 1962, pp. 419-422. More specifically, the polyamide 4 can be obtained by the following procedure. That is, a small amount of sodium metal is reacted with α-pyrrolidone, and an anionic species is generated for some of the α-pyrrolidone. N-acylated pyrrolidone is then added as an initiator thereto, thereby the ring-opening reaction of pyrrolidone proceeds continuously, and an aggregate of polyamide 4 can be obtained.

(2) Dissolution Step

The dissolution step according to the present embodiment includes dissolving a polyamide having the structure described above in hot water.

In the dissolution step, the polyamide is preferably added to hot water so that the concentration of the polyamide in the hot water is from 0.1 wt% to 50 wt% and preferably from 1 wt% to 30 wt%. By setting the amount of the polyamide that is added to hot water to be within the aforementioned range, non-spherical particles are easily obtained.

In the dissolution step, the temperature of the hot water is preferably from 100°C to 200°C, more preferably from 100°C to 180°C, and most preferably from 130°C to 160°C. From the perspective of solubility of the polyamide in hot water, the temperature of the hot water is preferably within the range described above.

In the present embodiment, after the polyamide is added to the hot water, the polyamide is preferably dissolved while maintaining the temperature of the hot water. Furthermore, the time required for dissolution may be determined appropriately based on the temperature of the hot water, the concentration of the polyamide, and the molecular weight of the polyamide.

Note that the dissolution step may be a step in which the polyamide is added to water and then heated to a predetermined temperature to dissolve.

(3) Precipitation Step

In the precipitation step, after the dissolution step described above, the solution in which the polyamide is dissolved in hot water (hereinafter, referred to as a polyamide solution) is cooled under stirring. Examples of the cooling method include, but are not limited to, (i) a process in which the polyamide solution is placed at room temperature (approximately 23°C) and cooled naturally, (ii) a process in which the polyamide solution is placed at room temperature (approximately 23°C) and cooled with blown air using an air blower or the like to blow air onto a device or container, and (iii) a process in which the device or container is placed in an ice-water bath and cooled. Another example is a process in which the polyamide solution is placed in an environment at an ambient temperature that is lower than room temperature (approximately 23°C). Note that with respect to the cooling processes of (i) to (iii), ice cooling provides the fastest cooling rate, followed by blown air cooling, and natural cooling has the slowest cooling rate.

From the perspective of suppressing variations in the circularity and variations in the particle size distribution, cooling is preferably performed with a cooling process that provides a faster cooling rate than that of natural cooling. Therefore, cooling is preferably performed by, for example, blown air cooling or ice cooling. When cooling is performed at a faster rate than that of natural cooling, the CV value of the circularity of the polyamide particles is reduced, and the D90/D50 value of the particle size is smaller compared to natural cooling. That is, compared to a case where the obtained polyamide particles are cooled by natural cooling, variations in the circularity and particle size of the obtained polyamide particles are reduced. Furthermore, when cooling is performed by ice cooling, the circularity and particle size of the polyamide particles are smaller compared to cooling by blown air.

In the precipitation step of the present embodiment, stirring is performed when cooling the polyamide solution. The stirring speed is not particularly limited as long as the stirring speed is of an extent at which the polyamide solution is in a fluid state when the polyamide particles are precipitated and at which settling of the precipitated polyamide particles does not occur. Moreover, the stirring speed may be adjusted, as appropriate, in accordance with the volume of the container, the amount of the polyamide solution, the amount of the polyamide that is dissolved, and the like.

Polyamide particles in which the particles are non-spherical and in which the particle size distribution and circularity distribution are sharp, that is, the magnitude of the particle size and the circularity are made uniform can be provided by including the polymerization step, the dissolution step, and the precipitation step described above in the method for producing polyamide particles of the present embodiment.

Summary

As described above, the polyamide particles according to the present invention consist of a polyamide consisting of repeating structural units having at least one alkylene group and at least one amide bond, each of the at least one alkylene group having 1 to 3 carbon atoms; and the polyamide particles have a configuration in which the main shape of the particles is a non-spherical shape with a circularity of less than 0.98 and in which a coefficient of variation (CV) of the circularity distribution is 30% or less.

The non-spherical shape does not meet the requirements for a spherical shape, which is a sphere with a sphericity of 80 or more.

The circularity is a value that is determined by Equation (3):

$$\text{circularity} = 4\pi \cdot S/L^2 \cdot \cdot \cdot \text{Equation (3)},$$

where L is a total outer perimeter of a shape of the particles when the particles are viewed from one direction, and S is a surface area of the shape.

The coefficient of variation (CV) of a circularity distribution is a value that is determined by Equation (2):

$$\text{coefficient of variation (CV) of a circularity distribution (\%)} = [(\text{standard deviation in circularity distribution})/(\text{average value of circularity distribution})] \times 100 \cdot \cdot \cdot \text{Equation (2)};$$

and

the sphericity is a value calculated in accordance with Equation (4) below by measuring the short diameter and the long diameter for a quantity n of arbitrarily selected polyamide fine particles:

$$\text{Sphericity} = [(\Sigma(\text{short diameter/long diameter}))/n] \times 100 \cdot \cdot \cdot \text{Equation (4)}.$$

In addition, the polyamide particles according to an embodiment of the present invention preferably have a D90/D50 value of the particle size distribution of 10 or less.

In addition, the polyamide particles according to an embodiment of the present invention preferably have a D90/D50 value of the particle size distribution of 5 or less.

Additionally, with respect to the polyamide particles according to an embodiment of the present invention, the structural unit is preferably represented by the above-described Formula (1).

Additionally, with respect to the polyamide particles according to an embodiment of the present invention, the structural unit is preferably represented by the above-described Formula (2).

The method for producing polyamide particles according to an embodiment of the present invention is configured to include: a polymerization step of preparing, through polymerization, a polyamide including repeating structural units having at least one alkylene group and at least one amide bond, each of the at least one alkylene group having 1 to 3 carbon atoms; a dissolution step of dissolving the polyamide obtained in the polymerization step in hot water; and a precipitation step of precipitating particles of the polyamide by cooling a solution obtained in the dissolution step under stirring.

Furthermore, in the above-described precipitation step of the method for producing polyamide particles according to an embodiment of the present invention, the solution is preferably cooled at a faster cooling rate than that of natural cooling.

Embodiments of the present invention will be described in further detail hereinafter using examples. The present invention is not limited to the examples below, and it goes without saying that various aspects are possible with regard to the details thereof. Furthermore, the present invention is not limited to the embodiments described above, and various modifications are possible within the scope defined by the claims. Embodiments obtained by appropriately combining the technical means disclosed by the embodiments are also included in the technical scope of the present invention.

## Examples

### Method for Synthesizing Polyamide 4

Polyamide 4 (hereinafter, also referred to as "PA4") was synthesized according to the synthesis method described in the Non-Patent Document 1 of "Alkali-catalyzed polymerization of $\alpha$-pyrrolidone in the presence of N,N'-adipyl-dipyrrolidone", Masakazu TANIYAMA, Takashi NAGAOKA, Toshihiro TAKADA, Kazunori SANUYAMA, Journal of the Chemical Society of Japan, Industrial Chemistry Section, Vol. 65, No. 3, 1962, pp. 419-422. More specifically, 1 mol% of sodium (Na) metal was added to $\alpha$-pyrrolidone in a sealed flask in a 50°C hot water bath. After the sodium dissolved, 0.1 mol% of N,N'-adipyl-dipyrrolidone was added as an initiator. The system immediately became cloudy and became difficult to be stirred soon. At ten hours after the stirring was stopped, the aggregate produced in the flask was removed and pulverized, after which the unreacted product and low-molecular weight substance were washed with acetone. The aggregate was then dried, and a powdery PA4 was obtained.

The weight average molecular weight (Mw) of the obtained PA4 was 96000. The weight average molecular weight was measured using the following procedure, analysis device and conditions.

### Measurement Procedure:

In hexafluoroisopropanol (HFIP) in which sodium trifluoroacetate was dissolved at a concentration of 5 mM, 10 mg of the PA4 sample obtained as described above was dissolved to prepare a solution of 10 $cm^3$, and then the solution was filtered using a membrane filter to obtain a sample solution. An amount of 10 $\mu$L of the sample solution was injected into the analysis device described below, and the weight average molecular weight of the PA4 was measured under the measurement conditions described below.

- Analyzer: gel permeation chromatography (GPC) analysis device (GPC104, available from Showa Denko K.K.)
- Measurement Conditions:

  A) SHODEX 104 System
  B) Column: Showa Denko HFIP 606 $\times$ 2 in series, 40°C
  C) 5 mM $CF_3COONa$/HFIP, 0.1 mL/min
  D) Detector: RI
  E) 10 to 11 mg of sample/5 mM $CF_3COONa$/10 mL of HFIP
  F) Calibration (in terms of PMMA) using a PMMA standard substance (150 E4, 65.9 E4, 21.8 E4, 4.96 E4, 2.06 E4, 0.68 E4, 0.2 E4).

### Example 1

PA4 and 400 mL of deionized water were added to a pressure resistant container having a volume of 1 L such that the concentration of PA4 with respect to deionized water was 1 wt%, and the mixture was heated to an internal temperature of 150°C and then left for 6 hours. Subsequently, while stirring was performed at a rotational speed of 300 rpm, the hot water in which the PA4 was dissolved was cooled using a blower to blow air onto the pressure resistant container until the hot water reached room temperature (23°C), and a suspension solution in which PA4 fine particles were dispersed in water was obtained. The obtained suspension solution was filtered using filter paper, and the obtained

product was dried to obtain PA4 fine particles.

The obtained particles were observed with a scanning electron microscope (SEM) using a NeoScope JCM-5000 (available from JEOL Ltd.) under conditions including an accelerating voltage of 10 kV and a high vacuum pressure. As a result of the SEM observation, the PA4 fine particles were found to be irregularly shaped particles (see FIG. 1).

Example 2

PA4 fine particles were obtained in the same manner as in Example 1 with the exception that the rotational speed of the stirring at the time of cooling was 50 rpm.

As a result of SEM observations performed on the particles obtained in the same manner as in Example 1, the PA4 fine particles were found to be irregularly shaped particles (see FIG. 2).

Example 3

PA4 and 400 mL of deionized water were added to a pressure resistant container having a volume of 1 L such that the concentration of PA4 with respect to deionized water was 1 wt%, and the mixture was heated to an internal temperature of 150°C and then left for 6 hours. Subsequently, while stirring was performed at a rotational speed of 300 rpm, the hot water in which the PA4 was dissolved was naturally cooled until the hot water reached room temperature (23°C), and a suspension solution in which PA4 fine particles were dispersed in water was obtained. The obtained suspension solution was filtered using filter paper, and the obtained product was dried to obtain PA4 fine particles.

As a result of SEM observations performed on the particles obtained in the same manner as in Example 1, the PA4 fine particles were found to be irregularly shaped particles (see FIG. 3).

Example 4

PA4 and 400 mL of deionized water were added to a pressure resistant container having a volume of 1 L such that the concentration of PA4 with respect to deionized water was 1 wt%, and the mixture was heated to an internal temperature of 180°C. Next, while stirring was performed at a rotational speed of 100 rpm, the hot water in which the PA4 was dissolved was cooled with an ice-water bath until the hot water reached room temperature (23°C), and a suspension solution in which PA4 fine particles were dispersed in water was obtained. The obtained suspension solution was filtered using filter paper, and the obtained product was dried to obtain PA4 fine particles.

As a result of SEM observations performed on the particles obtained in the same manner as in Example 1, the PA4 fine particles were found to be irregularly shaped particles (see FIG. 4).

Example 5

PA4 fine particles were obtained in the same manner as in Example 4 with the exception that the rotational speed of the stirring at the time of cooling was 300 rpm.

As a result of SEM observations performed on the particles obtained in the same manner as in Example 1, the PA4 fine particles were found to be irregularly shaped particles (see FIG. 5).

Example 6

PA4 fine particles were obtained in the same manner as in Example 4 with the exception that the rotational speed of the stirring at the time of cooling was 600 rpm.

As a result of SEM observations performed on the particles obtained in the same manner as in Example 1, the PA4 fine particles were found to be rod-shaped spherical particles (see FIG. 6).

Comparative Example 1

PA4 and 400 mL of deionized water were added to a pressure resistant container having a volume of 1 L such that the concentration of PA4 with respect to deionized water was 1 wt%, and the mixture was heated to an internal temperature of 150°C and then left for 6 hours. Subsequently, the hot water in which the PA4 was dissolved was naturally cooled without stirring until the hot water reached room temperature (23°C), and a suspension solution in which PA4 fine particles were dispersed in water was obtained. The obtained suspension solution was filtered using filter paper, and the obtained product was dried to obtain PA4 fine particles.

As a result of SEM observations performed on the particles obtained in the same manner as in Example 1, the PA4 fine particles were found to be spherical particles.

Measurement of Circularity and Particle Size Distribution

Deionized water was added to the obtained PA4 fine particles, and the mixture was subjected to an ultrasonic treatment for 10 minutes, after which the circularity and particle size were measured under the following conditions using a wet-flow particle size analyzer (FPIA-3000: Sysmex Corporation). Based on the measurement results, the average value of the circularity, the CV value, and the D90/D50 value of the particle size distribution were calculated. The results are shown in Table 1.

Measurement mode: HPF
Count method: total count
Sheath Liquid: particle sheath
Objective lens: standard (10x)
Optical system: bright visual field

Sphericity Measurement

Sphericity measurements were performed for Example 6 and Comparative Example 1, for which measurements were possible. The results are shown in Table 1.

[Table 1]

| | Cooling method | Stirring speed | Particle shape | Sphericity | Average circularity | CV value (%) | D90/D50 |
|---|---|---|---|---|---|---|---|
| Example 1 | Blown air cooling | 300 rpm | Irregularly shaped | Difficult to measure | 0.88 | 22.2 | 3 |
| Example 2 | Blown air cooling | 50 rpm | Irregularly shaped | Difficult to measure | 0.79 | 24.3 | 3.5 |
| Example 3 | Room temperature cooling | 300 rpm | Irregularly shaped | Difficult to measure | 0.65 | 28.7 | 5.9 |
| Example 4 | Ice cooling | 100 rpm | Irregularly shaped | Difficult to measure | 0.79 | 23.5 | 1.5 |
| Example 5 | Ice cooling | 300 rpm | Irregularly shaped | Difficult to measure | 0.89 | 12.3 | 1.9 |
| Example 6 | Ice cooling | 600 rpm | Sphere | 28 | 0.79 | 20 | 2 |
| Comparative Example 1 | Room temperature cooling | - | Spherical | 99 | 0.82 | 19.2 | 2.7 |

Industrial Applicability

The present invention can be used in fields that use polyamide 4 and other such polyamides.

## Claims

1. Polyamide particles consisting of a polyamide that consists of repeating structural units having at least one alkylene group and at least one amide bond, each of the at least one alkylene group having 1 to 3 carbon atoms; wherein a main shape of the particles is a non-spherical shape with a circularity of less than 0.98; wherein a non-spherical shape does not meet the requirements for a spherical shape, which is a sphere with a sphericity of 80 or more, and a coefficient of variation (CV) of a circularity distribution is 30% or less, where the circularity is a value that is determined by Equation (3):

$$\text{circularity} = 4\pi \cdot S/L^2 \cdots \text{Equation (3)},$$

where L is a total outer perimeter of a shape of the particles when the particles are viewed from one direction, and S is a surface area of the shape; and
the coefficient of variation (CV) of a circularity distribution is a value that is determined by Equation (2):

$$\text{coefficient of variation (CV) of a circularity distribution (\%)} = [(\text{standard deviation in circularity distribution})/(\text{average value of circularity distribution})] \times 100 \cdots \text{Equation (2)};$$

and
the sphericity is a value calculated in accordance with Equation (4) below by measuring the short diameter and the long diameter for a quantity n of arbitrarily selected polyamide fine particles:

$$\text{Sphericity} = [(\Sigma(\text{short diameter/long diameter}))/n] \times 100 \cdots \text{Equation (4)}.$$

2. The polyamide particles according to claim 1, wherein a D90/D50 value of a particle size distribution is 10 or less.

3. The polyamide particles according to claim 1 or 2, wherein the D90/D50 value of the particle size distribution is 5 or less.

4. The polyamide particles according to any one of claims 1 to 3, wherein the structural unit is represented by the following formula (1):

[Chemical Formula 1]

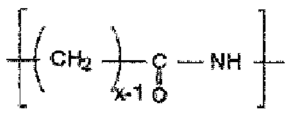 · · · Formula (1)

where, x is 2, 3, or 4.

5. The polyamide particles according to any one of claims 1 to 3, wherein the structural unit is represented by the following formula (2):

[Chemical Formula 2]

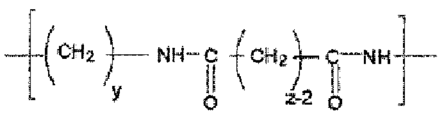 · · · Formula (2)

where, y is 2 or 3, and z is 2, 3, or 4.

6. A method for producing polyamide particles, the method comprising:

a polymerization step of preparing, through polymerization, a polyamide that comprises repeating structural units having at least one alkylene group and at least one amide bond, each of the at least one alkylene group having 1 to 3 carbon atoms;
a dissolution step of dissolving the polyamide obtained in the polymerization step in hot water; and
a precipitation step of precipitating particles of the polyamide by cooling a solution obtained in the dissolution step under stirring.

7. The method for producing polyamide particles according to claim 6, wherein, in the precipitation step, the solution is cooled at a faster cooling rate than that of natural cooling, wherein natural cooling is a rate obtained by placing the solution at room temperature of approximately 23°C.

## Patentansprüche

1. Polyamidpartikel, bestehend aus einem Polyamid, das aus sich wiederholenden Struktureinheiten mit mindestens einer Alkylengruppe und mindestens einer Amidbindung besteht, wobei jede der mindestens einen Alkylengruppe 1 bis 3 Kohlenstoffatome aufweist; wobei
eine Hauptform der Partikel eine nichtsphärische Form mit einer Zirkularität von weniger als 0,98 ist; wobei eine nichtsphärische Form die Anforderungen an eine sphärische Form, die eine Kugel mit einer Sphärizität von 80 oder mehr ist, nicht erfüllt, und
ein Variationskoeffizient (CV) einer Zirkularitätsverteilung 30 % oder weniger beträgt, wobei die Zirkularität ein Wert ist, der durch Gleichung (3) bestimmt wird:

$$\text{Zirkularität} = 4\pi \cdot S/L^2 \cdots \text{Gleichung (3)},$$

wobei L ein Gesamtaußenumfang einer Form der Partikel ist, wenn die Partikel aus einer Richtung betrachtet werden, und S ein Oberflächenbereich der Form ist; und
der Variationskoeffizient (CV) einer Zirkularitätsverteilung ein Wert ist, der durch Gleichung (2) bestimmt wird:

$$\text{Variationskoeffizient (CV) einer Zirkularitätsverteilung (\%)} = [(\text{Standardabweichung der Zirkularitätsverteilung})/(\text{Mittelwert der Zirkularitätsverteilung})] \times 100 \cdots \text{Gleichung (2)};$$

und
die Sphärizität ein Wert ist, der gemäß nachstehender Gleichung (4) durch Messen des kurzen Durchmessers und des langen Durchmessers für eine Menge n von willkürlich ausgewählten Polyamid-Feinpartikeln berechnet wird:

$$\text{Sphärizität} = [(\Sigma(\text{kurzer Durchmesser}/\text{langer Durchmesser}))/n] \times 100 \cdots \text{Gleichung (4)}.$$

2. Polyamidpartikel nach Anspruch 1, wobei ein D90/D50-Wert einer Partikelgrößenverteilung 10 oder weniger beträgt.

3. Polyamidpartikel nach Anspruch 1 oder 2, wobei der D90/D50-Wert der Partikelgrößenverteilung 5 oder weniger beträgt.

4. Polyamidpartikel nach einem der Ansprüche 1 bis 3, wobei die Struktureinheit durch die folgende Formel (1) dargestellt wird:

[Chemische Formel 1]

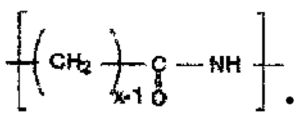
• • • Formel (1)

wobei x 2, 3 oder 4 ist.

5. Polyamidpartikel nach einem der Ansprüche 1 bis 3, wobei die Struktureinheit durch die folgende Formel (2) dargestellt wird:

[Chemische Formel 2]

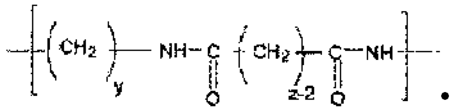 • • • Formel (2)

wobei y 2 oder 3 ist und z 2, 3 oder 4 ist.

**6.** Verfahren zum Herstellen von Polyamidpartikeln, wobei das Verfahren umfasst:

einen Polymerisationsschritt des Herstellens, durch Polymerisation, eines Polyamids, das sich wiederholende Struktureinheiten mit mindestens einer Alkylengruppe und mindestens einer Amidbindung umfasst, wobei jede der mindestens einen Alkylengruppe 1 bis 3 Kohlenstoffatome aufweist;
einen Auflösungsschritt des Auflösens des in dem Polymerisationsschritt erhaltenen Polyamids in heißem Wasser; und
einen Fällungsschritt des Fällens von Partikeln des Polyamids durch Abkühlen einer in dem Auflösungsschritt erhaltenen Lösung unter Rühren.

**7.** Verfahren zum Herstellen von Polyamidpartikeln nach Anspruch 6, wobei in dem Fällungsschritt die Lösung mit einer schnelleren Abkühlgeschwindigkeit abgekühlt wird als die der natürlichen Abkühlung, wobei die natürliche Abkühlung eine Geschwindigkeit ist, die durch Platzieren der Lösung in Raumtemperatur von ungefähr 23 °C erhalten wird.

**Revendications**

**1.** Particules de polyamide constituées d'un polyamide qui est constitué de motifs structuraux de répétition ayant au moins un groupe alkylène et au moins une liaison amide, chacun parmi l'au moins un groupe alkylène ayant 1 à 3 atomes de carbone ; dans lesquelles
une forme principale des particules est une forme non sphérique avec une circularité inférieure à 0,98 ; dans lesquelles une forme non sphérique ne respecte pas les exigences pour une forme sphérique, qui est une sphère avec une sphéricité de 80 ou plus, et
un coefficient de variation (CV) d'une distribution de circularité est de 30 % ou moins, où la circularité est une valeur qui est déterminée par l'Équation (3) :

$$\text{circularité} = 4\pi \cdot S/L^2 \cdots \text{Équation (3)},$$

où L est un périmètre externe total d'une forme des particules lorsque les particules sont visualisées à partir d'une direction, et S est une superficie de la forme ; et
le coefficient de variation (CV) d'une distribution de circularité est une valeur qui est déterminée par l'Équation (2) :

$$\text{coefficient de variation (CV) d'une distribution de circularité (\%)} = [(\text{écart type de distribution de circularité})/(\text{valeur moyenne de distribution de circularité})] \times 100 \cdots \text{Équation (2)} ;$$

et
la sphéricité est une valeur calculée conformément à l'Équation (4) ci-dessous en mesurant le diamètre court et le diamètre long pour une quantité n de particules fines de polyamide arbitrairement sélectionnées :

$$\text{Sphéricité} = [(\Sigma(\text{diamètre court}/\text{diamètre long}))/n] \times 100 \cdots \text{Équation (4)}.$$

**2.** Particules de polyamide selon la revendication 1, dans lesquelles une valeur D90/D50 d'une distribution de taille

de particules vaut 10 ou moins.

3. Particules de polyamide selon la revendication 1 ou 2, dans lesquelles la valeur D90/D50 de la distribution de taille de particules vaut 5 ou moins.

4. Particules de polyamide selon l'une quelconque des revendications 1 à 3, dans lesquelles le motif structural est représenté par la formule (1) suivante :

[Formule chimique 1]

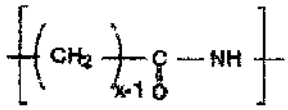

• • • Formule (1)

où, x vaut 2, 3, ou 4.

5. Particules de polyamide selon l'une quelconque des revendications 1 à 3, dans lesquelles le motif structural est représenté par la formule (2) suivante :

[Formule chimique 2]

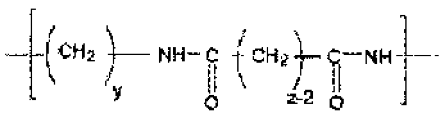

• • • Formule (2)

où, y vaut 2 ou 3, et z vaut 2, 3, ou 4.

6. Procédé de production de particules de polyamide, le procédé comprenant :

une étape de polymérisation consistant à préparer, par polymérisation, un polyamide qui comprend des motifs structuraux de répétition ayant au moins un groupe alkylène et au moins une liaison amide, chacun parmi l'au moins un groupe alkylène ayant 1 à 3 atomes de carbone ;
une étape de dissolution consistant à dissoudre le polyamide obtenu dans l'étape de polymérisation dans de l'eau chaude ; et
une étape de précipitation consistant à précipiter des particules du polyamide par refroidissement d'une solution obtenue dans l'étape de dissolution sous agitation.

7. Procédé de production de particules de polyamide selon la revendication 6, dans lequel, dans l'étape de précipitation, la solution est refroidie à une vitesse de refroidissement plus rapide que celle d'un refroidissement naturel, dans lequel un refroidissement naturel est une vitesse obtenue en plaçant la solution à la température ambiante d'approximativement 23 °C.

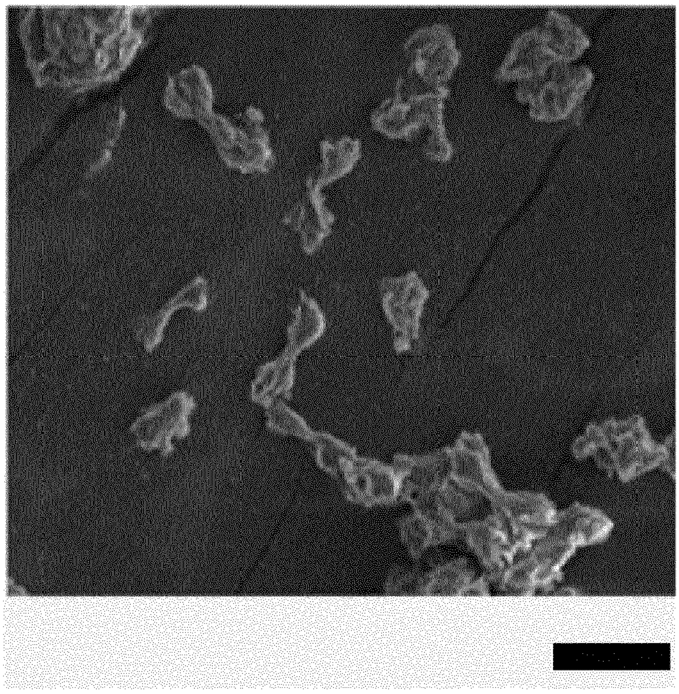

FIG. 1

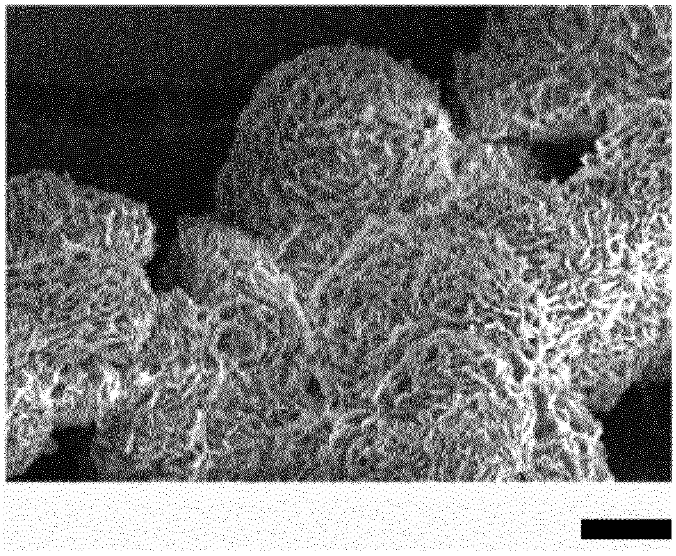

FIG. 2

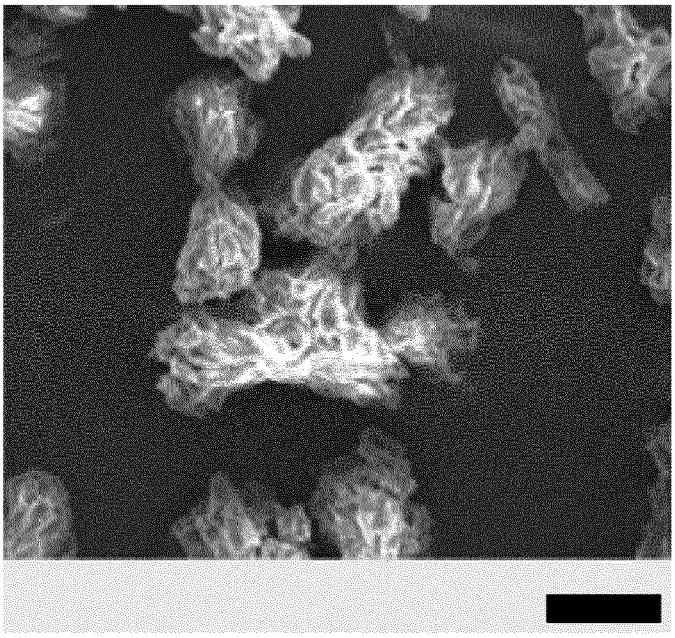

FIG. 3

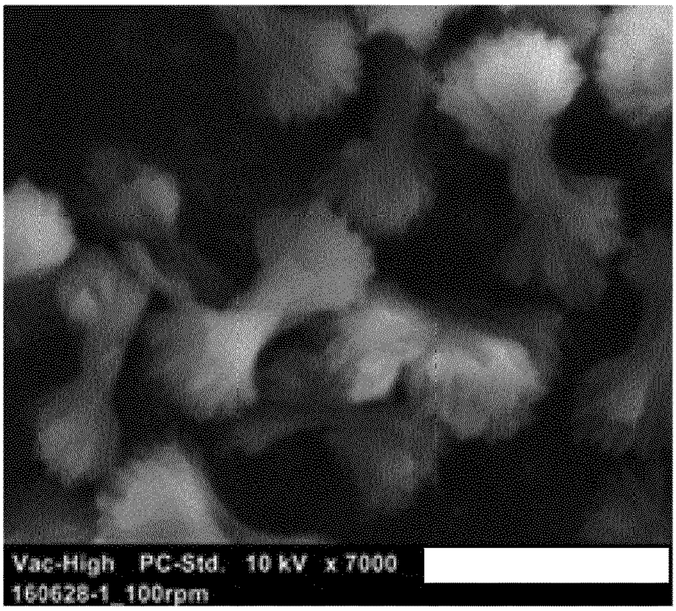


FIG. 4

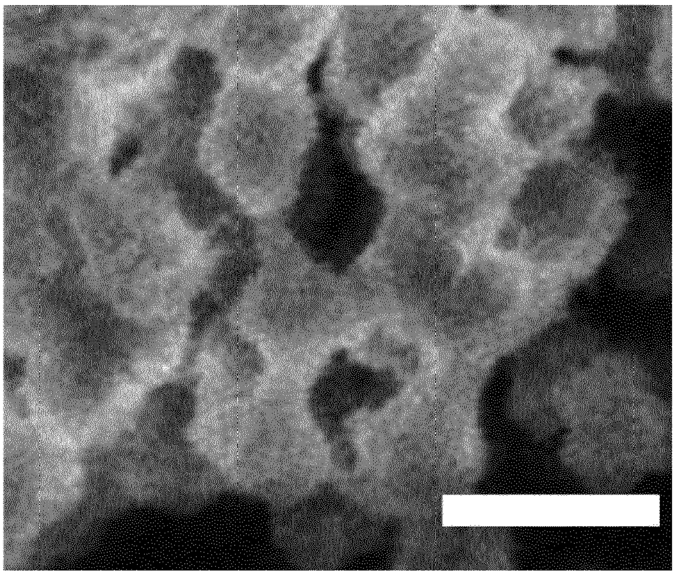

FIG. 5

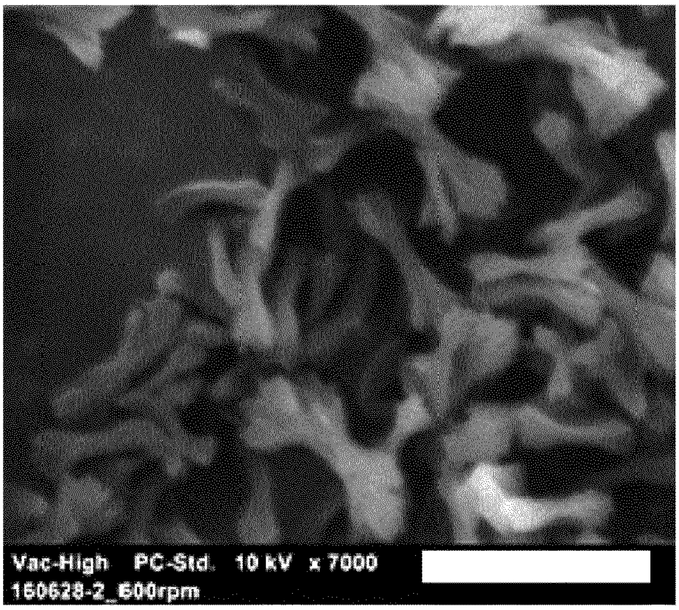


FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010101134 A
- JP 2004051751 A


### Non-patent literature cited in the description


- **MASAKAZU TANIYAMA ; TAKASHI NAGAOKA ; TOSHIHIRO TAKADA ; KAZUNORI SANUYAMA.** Alkali-catalyzed polymerization of $\alpha$-pyrrolidone in the presence of N,N'-adipyl-dipyrrolidone. *Journal of the Chemical Society of Japan, Industrial Chemistry Section,* 1962, vol. 65 (3), 419-422